# EUROPEAN PATENT SPECIFICATION

(11) **EP 3 099 743 B1**
(45) Date of publication and mention of the grant of the patent: **19.06.2019**
(21) Application number: 15702943.0
(22) Date of filing: 26.01.2015
(51) Int. Cl.: C08L 67/02, C08L 69/00

(54) **HALOGEN FREE FLAME RETARDANT POLYCARBONATE/THERMOPLASTIC POLYESTER MOLDING COMPOSITIONS WITH POLYMERIC PHOSPHORUS FLAME RETARDANT**
HALOGENFREIES FLAMMHEMMENDES POLYCARBONAT/THERMOPLASTISCHE POLYESTERFORMZUSAMMENSETZUNGEN MIT FLAMMHEMMER AUS POLYMERISCHEM PHOSPHOR
COMPOSITIONS DE MOULAGE EN POLYCARBONATE/POLYESTER THERMOPLASTIQUE IGNIFUGES SANS HALOGÈNE À BASE D'UN AGENT IGNIFUGE PHOSPHORÉ POLYMÈRE

(30) Priority: 28.01.2014 US 201461932550 P
(43) Date of publication of application: 07.12.2016
(73) Proprietor: SABIC Global Technologies B.V., 4612 PX Bergen op Zoom (NL)
(72) Inventor: DING, Tianhua, Mt. Vernon, Indiana 47630 (US); SHEN, Dake, Shanghai 201319 (CN); SHI, Hongtao, Shanghai 201319 (CN); CHEN, Lin, Shanghai 201319 (CN)
(74) Representative: Balder IP Law, S.L.
(86) International application number: PCT/US2015/012813
(87) International publication number: WO 2015/116509

(56) References cited:
- EP-A1- 0 992 542
- WO-A1-2012/058821
- US-A1- 2008 090 961
- US-A1- 2012 172 506
- US-A1- 2013 274 417

## Description

### BACKGROUND OF THE INVENTION

This disclosure relates to flame retardant (FR) polycarbonate/thermoplastic polyester molding compositions with improved mechanical properties and increased polyester loading level. More particularly, the disclosure relates to polycarbonate/ thermoplastic polyester resin alloys with polymeric phosphorus flame retardant additive and siloxane impact modifier. Also included are methods for preparing such compositions and articles derived there from.

Polycarbonate (PC)/thermoplastic polyester resin alloys have shown excellent performance regarding material chemical resistance and mechanical properties. However, compared to pure PC or PC/ABS blends, the use of PC/thermoplastic polyester resin alloys in the electrical and electronics markets, where halogen-free flame retardancy is usually needed, is still very limited. One potential reason for this situation is that most of the traditional halogen-free flame retardant additives are organic small molecules or oligomeric phosphorus containing compounds, the use of either of which detrimentally affects resin mechanical properties, thus limiting polyester loading in ecologically viable FR PC/polyester compositions.

For example, U.S. Pat. No 7,067,567 describes a FR PC/polyester composition using oligomeric phosphate as the FR additive that achieved a UL VO-1.5 mm FR performance, but the polyester content had a clear maximum limitation of 12 wt%, thus limiting the chemical resistance of resulting molded articles. EP Pat. No. 0992542 also describes a highly ductile FR PC/thermoplastic polyester composition using epoxy containing copolymer as the impact modifier. However, the molding process capability of the composition was poor due to the crosslinking effect of the epoxy. WO2012/058821 discloses flame retardant (FR) polycarbonate/polyester compositions that achieved a UL V0-1.5 mm FR performance by using a bisphenol A diphosphate as organophosphorus flame retardant. Thus, a need remains for halogen-free PC/polyester blends with higher polyester content and well balanced performance relating to impact strength, heat resistance, flame resistance and process capability.

### SUMMARY OF THE INVENTION

This invention described herein meets these and other needs. The invention provides a solution to current market requirements for ecologically friendly halogen-free FR polycarbonate/thermoplastic polyester compositions with improved chemical resistance or heat resistance, while other properties (impact, FR and flow) are maintained at an acceptable level. The new polycarbonate/thermoplastic polyester compositions contain, apart from the base resin, a combination of silicone impact modifier, polymeric phosphorus FR additive, and a fluorinated polyolefin copolymer as anti-dripping agent.

In particular, the invention provides a thermoplastic composition comprising, based on total weight of the composition:
from 10 to 50 weight percent of a terephthalate-based polyester;
from 15 to 65 weight percent of a polycarbonate;
a silicone material selected from the group consisting of: (i) from 20 to 40 weight percent of a polyorganosiloxane-polycarbonate copolymer; and (ii) from 1 to 5 weight percent of a silicone rubber; or a mixture thereof, wherein the siloxane content of the silicone material is greater than 15 weight percent;
from 3 to 40 percent of a bisphenol A-based polyphosphonate flame retardant, wherein the phosphorous content is at least 2 percent by weight and the molecular weight of the polyphosphonate is more than 20000; and
from 0.01 to 5 weight percent of an antidripping agent;
and wherein the composition has:
a notched Izod impact strength of greater than 500 J/m measured at room temperature, according to ASTM D256 on a sample bar molded from the composition and having a thickness of 3.2 mm;
a Vicat softening temperature higher than 120 °C in accordance with ASTM D1525 on a sample bar molded from the composition and having a thickness of 3.2 mm; and
a UL-94 flammability rating of V0 measured on a molded sample with a thickness of 1.5 mm.

Also disclosed are processes for making such compositions as well as articles derived therefrom.

### DETAILED DESCRIPTION OF THE INVENTION

As used herein the singular forms "a," "an," and "the" include plural referents. The term "combination" is inclusive of blends, mixtures, alloys, reaction products, and the like. Unless defined otherwise, technical and scientific terms used herein have the same meaning as is commonly understood by one of skill. Compounds are described using standard nomenclature. The term "and a combination thereof' is inclusive of the named component and/or other components not specifically named that have essentially the same function.

Other than in the operating examples or where otherwise indicated, all numbers or expressions referring to quantities of ingredients, reaction conditions, and the like, used in the specification and claims are to be understood as modified in all instances by the term "about." Various numerical ranges are disclosed in this patent application. Because these ranges are continuous, they include every value between the minimum and maximum values. The endpoints of all ranges reciting the same characteristic or component are independently combinable and inclusive of the recited endpoint. Unless expressly indicated otherwise, the various numerical ranges specified in this application are approximations. The term "from more than 0 to" an amount means that the named component is present in some amount more than 0, and up to and including the higher named amount. "Halogen-free" means that no halogenated compounds are intentionally added to the compositions.

All ASTM tests and data are from the 2003 edition of the Annual Book of ASTM Standards unless otherwise indicated.

### POLYALKYLENE TEREPHTHALATE

The composition comprises a polyalkylene terephthalate or a mixture of polyalkylene terephthalates. Polyalkylene terephthalates in the context of the invention are polyalkylene terephthalates which are derived from terephthalic acid (or its reactive derivatives) and alkanediols, for example based on ethylene glycol, propylene glycol or butanediol or copolymerized polyesters having polyalkylene terephthalate as a principal component included in a polyester. Examples of the polyalkylene terephthalates, of the present invention include, but are not limited to, poly(ethylene terephthalate) ("PET"), poly(ethylene *terephthalate*-co-*ethylene* adipate ("PETA"), poly(butylene terephthalate) ("PBT"), poly(propylene terephthalate) ("PPT"), poly(cyclohexylenedimethylene terephthalate) ("PCT"), poly(trimethylene terephthalate) ("PTT"), poly(1,4-cyclohexylene dimethylene terephthalate-co-isophthalate) ("PCTA"), glycol modified polycyclohexylenedimethylene terephthalate ("PCTG"), glycol-modified polyethylene terephthalate ("PETG"), or combinations of one or more of each type of the polyalkylene terephthalates. As defined herein, polybutylene terephthalate or PBT includes PBT made from terephthalic acid, from dimethyl terephthalate, from recycled PET and from any other material that may be used to produce PBT.

In one embodiment, the polyalkylene terephthalate is a PET, a PBT, a combination of PBTs or a combination of a PBT and a PET. The that is used PBT can be prepared from virgin materials or from recycled or scrap PET according to procedures readily available to the skilled practitioner.

Even more particularly, the polyalkylene terephthalate is PBT or a combination of PBTs. In these and other embodiments, about 10 to about 50 parts by weight of PBT or a combination of PBTs is used. More particularly, about 15 to about 40 parts by weight of PBT or a combination of PBTs is used. More particularly, about 17 to about 37 parts by weight of PBT or a combination of PBTs is used.

In a particular embodiment, the polyalkylene terephthalate is a PBT having an intrinsic viscosity of 0.4 to 1.4cm³/g. As used herein, intrinsic viscosity is measured in a 60:40 mixture of phenol/tetrachloroethane mixture at 25°C according to ASTM D 2857-70 using a viscosimeter according to DIN 51562. More particularly, the composition of the present invention comprises a mixture of a first polybutylene terephthalate, having an intrinsic viscosity of 0.8 to 1.4 cm³/g and a second polybutylene terephthalate having an intrinsic viscosity of 0.4 to 0.8 cm³/g.

### POLYCARBONATE

As used herein, the term "polycarbonate" means a composition having repeating structural carbonate units of the Formula (1): 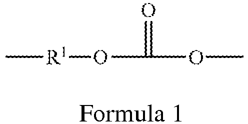 in which the R¹ groups are aromatic, aliphatic, or alicyclic organic radicals. In one embodiment, at least 60 percent of the total number of R¹ groups are aromatic organic radicals and the balance thereof are aliphatic, alicyclic, or aromatic radicals. In another embodiment, each R¹ is an aromatic organic radical, for example a radical of the Formula (2):

-A¹-Y¹-A² Formula 2

wherein each of A¹ and A² is a monocyclic divalent aryl radical and Y¹ is a bridging radical having one or two atoms that separate A¹ from A². In an exemplary embodiment, one atom separates A¹ from A². Illustrative non-limiting examples of radicals of this type are -O-, -S, -S(O)-, -S(O₂)-, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ may be a hydrocarbon group or a saturated hydrocarbon group such as methylene, cyclohexylidene, or isopropylidene. In one specific embodiment, the polycarbonate is a linear homopolymer derived from bisphenol A, in which each of A¹ and A² is p-phenylene and Y¹ is isopropylidene.

Polycarbonates may be produced by the reaction of dihydroxy compounds having the formula HO-R¹-OH, wherein R¹ is as defined above. Dihydroxy compounds suitable in an interfacial reaction include the dihydroxy compounds of formula (A) as well as dihydroxy compounds of formula (3)

HO-A¹-Y¹-A²-OH Formula 3

wherein Y¹, A¹ and A² are as described above. Also included are bisphenol compounds of general formula (4): 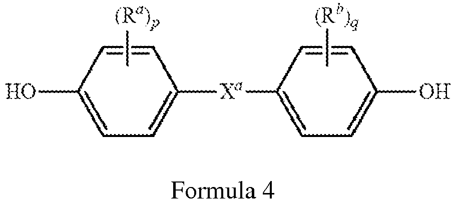 wherein R^{a} and R^{b} each represent a halogen atom or a monovalent hydrocarbon group and may be the same or different; p and q are each independently integers of 0 to 4; and X^{a} represents one of the groups of formula (5): 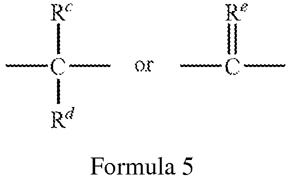 wherein R^{c} and R^{d} each independently represent a hydrogen atom or a monovalent linear or cyclic hydrocarbon group and R^{e} is a divalent hydrocarbon group.

Some illustrative, non-limiting examples of suitable dihydroxy compounds include the following: resorcinol, hydroquinone, 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl) -1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 1,1-bis (hydroxyphenyl)cyclopentane, 1,1-bis(4-hydroxyphenyl)cyclohexane, 1,1-bis (4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha,alpha'-bis(4-hydroxyphenyl)toluene, bis(4-hydroxyphenyl)acetonitrile, 2,2-bis(3-methyl -4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalide, 2-phenyl-3,3-bis(4-hydroxyphenyl)phthalimidine (PPPBP), 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, and the like, as well as combinations comprising at least one of the foregoing dihydroxy compounds.

Specific examples of the types of bisphenol compounds that may be represented by formula (3) include 1,1-bis(4-hydroxyphenyl)methane, 1,1-bis(4-hydroxyphenyl)ethane, 2,2-bis(4-hydroxyphenyl)propane (hereinafter "bisphenol A" or "BPA"), 2,2-bis(4-hydroxyphenyl)butane, 2,2-bis(4-hydroxyphenyl)octane, 1,1-bis(4-hydroxyphenyl)propane, 1,1-bis(4-hydroxyphenyl)n-butane, 2,2-bis(4-hydroxy-1-methylphenyl)propane, and 1,1-bis(4-hydroxy-t-butylphenyl)propane. Combinations comprising at least one of the foregoing dihydroxy compounds may also be used. The polycarbonate copolymers may be made by methods known in the art, such as by the method described in U.S. Application Publication 2003/0149223.

In some embodiments, blends of at least two different polycarbonates are used. In some of these embodiments, blends of at least two polycarbonates having different molecular weights are used. Branched polycarbonate are also useful as well as blends of a linear polycarbonate and a branched polycarbonate. The branched polycarbonates may be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl)alpha, alpha-dimethyl benzyl)phenol), 4-chloroformyl phthalic anhydride, trimesic acid, and benzophenone tetracarboxylic acid. The branching agents may be added at a level of 0.05 weight percent to 2.0 weight percent based on 100 percent by weight of the polycarbonate. All types of polycarbonate end groups are contemplated as being useful in the polycarbonate, provided that such end groups do not significantly affect desired properties of the thermoplastic compositions.

Polycarbonates as used herein further include blends of polycarbonates with other copolymers comprising carbonate chain units. A specific suitable copolymer is a "polyester carbonate", also known as a copolyester-polycarbonate. Such "polyester carbonate" copolymers further contain, in addition to recurring carbonate chain units of the formula (1), repeating units of formula (6) 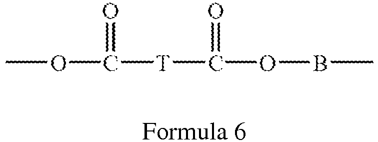 wherein B is a divalent radical derived from a dihydroxy compound, and may be, for example, a C₂₋₁₀ alkylene radical, a C₆₋₂₀ alicyclic radical, a C₆₋₂₀ aromatic radical or a polyoxyalkylene radical in which the alkylene groups contain 2 to 6 carbon atoms, specifically 2, 3, or 4 carbon atoms; and T is a divalent radical derived from a dicarboxylic acid, and may be, for example, a C₂₋₁₀ alkylene radical, a C₆₋₂₀ alicyclic radical, a C₆₋₂₀ alkyl aromatic radical, or a C₆₋₂₀ aromatic radical. As used herein, polyester carbonate means compositions having at least 5 mole percent of carbonate linkages relative to the molar sum of the carbonate and ester linkages.

In one embodiment, B is a C₂₋₆ alkylene radical. In another embodiment, B is derived from an aromatic dihydroxy compound of formula (7): 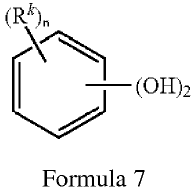 wherein each R^{k} is independently a halogen atom, a C₁₋₁₀ hydrocarbon group, or a C₁₋₁₀ halogen substituted hydrocarbon group, and n is 0 to 4. The halogen is usually bromine. Examples of compounds that may be represented by the formula (7) include resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or combinations comprising at least one of the foregoing compounds.

Examples of aromatic dicarboxylic acid compounds that may be used to prepare the polyester carbonate include isophthalic or terephthalic acid, 1,2-di(p-carboxyphenyl)ethane, 4,4'-dicarboxydiphenyl ether, 4,4'-bisbenzoic acid, and mixtures comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or mixtures thereof. A specific dicarboxylic acid comprises a mixture of isophthalic acid and terephthalic acid wherein the weight ratio of terephthalic acid to isophthalic acid is 10:1 to 0.2:9.8. In another specific embodiment, B is a C₂₋₆ alkylene radical and T is p-phenylene, m-phenylene, naphthalene, a divalent cycloaliphatic radical, or a mixture thereof. This class of polyester carbonate includes the poly(alkylene terephthalates). Suitable aliphatic dicarboxylic acids include succinic acid, oxalic acid, malonic acid, glutaric acid, adipic acid, pimelic acid, suberic acid, azelaic acid, sebacic acid, undecanoic diacid, dodecanoic diacid, maleic acid and fumaric acid. Rather than utilizing the dicarboxylic acid per se, it is possible, and sometimes even preferred, to employ the reactive derivatives of the acid, such as the corresponding acid halides, in particular the acid dichlorides and the acid dibromides in the interfacial polymerization method or esters such as optionally substituted phenyl esters in the melt polymerization method. Thus, for example, instead of using isophthalic acid, terephthalic acid, or mixtures thereof, it is possible to employ isophthaloyl dichloride, terephthaloyl dichloride, and mixtures thereof.

Suitable polycarbonates can be manufactured by processes such as interfacial polymerization or melt polymerization. Although the reaction conditions for interfacial polymerization may vary, an exemplary process generally involves dissolving or dispersing a dihydric phenol reactant in aqueous caustic soda or potash, adding the resulting mixture to a suitable water-immiscible solvent medium, and contacting the reactants with a carbonate precursor in the presence of a suitable catalyst such as triethylamine or a phase transfer catalyst, under controlled pH conditions, e.g., 8 to 10. The most commonly used water immiscible solvents include methylene chloride, 1,2-dichloroethane, chlorobenzene, toluene, and the like. Suitable carbonate precursors include, for example, a carbonyl halide such as carbonyl bromide or carbonyl chloride, or a haloformate such as a bishaloformate of a dihydric phenol (e.g., the bischloroformates of bisphenol A, hydroquinone, or the like) or a glycol (e.g., the bishaloformate of ethylene glycol, neopentyl glycol, polyethylene glycol, or the like). Combinations comprising at least one of the foregoing types of carbonate precursors may also be used.

Among the phase transfer catalysts that can be used are catalysts of the formula (R³)₄Q⁺X, wherein each R³ is independently the same or different and is a C₁₋₁₀ alkyl group; Q is a nitrogen or phosphorus atom; and X is a halogen atom or a C₁₋₈ alkoxy group or C₆₋₁₈ aryloxy group. Exemplary phase transfer catalysts include, for example, [CH₃(CH₂)₃]₄NX, [CH₃(CH₂)₃]₄X, [CH₃(CH₂)₅]₄NX, [CH₃(CH₂)₆]₄NX, [CH₃(CH₂)₄]₄NX, CH₃[CH₃(CH₂)₃]₃NX, and CH₃[CH₃(CH₂)₂]₃NX, wherein X is Cl⁻, Br⁻, a C₁₋₈ alkoxy group or a C₆₋₁₈ aryloxy group. An effective amount of a phase transfer catalyst can be 0.1 to 10 weight percent based on the weight of bisphenol in the phosgenation mixture. In another embodiment an effective amount of phase transfer catalyst can be 0.5 to 2 weight percent based on the weight of bisphenol in the phosgenation mixture. All types of polycarbonate end groups are contemplated as being useful in the thermoplastic composition, provided that such end groups do not significantly adversely affect desired properties of the compositions.

A chain stopper (also referred to as a capping agent) can be included during polymerization to form the polycarbonate. The chain stopper limits molecular weight growth rate, and so controls molecular weight in the polycarbonate. Exemplary chain stoppers include certain mono-phenolic compounds, mono-carboxylic acid chlorides, and/or mono-chloroformates. Mono-phenolic chain stoppers are exemplified by monocyclic phenols such as phenol and C₁₋₂₂ alkyl-substituted phenols such as p-cumyl-phenol, resorcinol monobenzoate, and p- and tertiary-butyl phenol; and monoethers of diphenols, such as p-methoxyphenol. Alkyl-substituted phenols with branched chain alkyl substituents having 8 to 9 carbon atom can be specifically mentioned. Certain mono-phenolic UV absorbers can also be used as a capping agent, for example 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, and the like.

Mono-carboxylic acid chlorides can also be used as chain stoppers. These include monocyclic, mono-carboxylic acid chlorides such as benzoyl chloride, C₁₋₂₂ allyl-substituted benzoyl chloride, toluoyl chloride, halogen-substituted benzoyl chloride, bromobenzoyl chloride, cinnamoyl chloride, 4-nadimidobenzoyl chloride, and combinations thereof; polycyclic, mono-carboxylic acid chlorides such as trimellitic anhydride chloride, and naphthoyl chloride; and combinations of monocyclic and polycyclic mono-carboxylic acid chlorides. Chlorides of aliphatic monocarboxylic acids with less than or equal to 22 carbon atoms are useful. Functionalized chlorides of aliphatic monocarboxylic acids, such as acryloyl chloride and methacryoyl chloride, are also useful. Also useful are mono-chloroformates including monocyclic, mono-chloroformates, such as phenyl chloroformate, alkyl-substituted phenyl chloroformate, p-cumyl phenyl chloroformate, toluene chloroformate, and combinations thereof.

Alternatively, melt processes may be used to make the polycarbonate. Generally, in the melt polymerization process, polycarbonates may be prepared by co-reacting, in a molten state, the dihydroxy reactant(s) and a diaryl carbonate ester, such as diphenyl carbonate, in the presence of a transesterification catalyst in a Banbury® mixer, twin screw extruder, or the like to form a uniform dispersion. Volatile monohydric phenol is removed from the molten reactants by distillation and the polymer is isolated as a molten residue.

Blends and/or mixtures of more than one polycarbonate may also be used. For example, a high flow and a low flow polycarbonate may be blended together. In one embodiment, a blend and/or mixture of linear polycarbonates having a weight average molecular weight relative to polycarbonate standards of less than 31,000 Daltons, specifically between 18,000 and 31,000 Daltons, is used.

In one embodiment, the polycarbonate is a 2,2-bis(4-hydroxyphenyl)propane (bisphenol-A) polycarbonate having a molecular weight of 25 to 40 K, commercially available under the trade designation LEXAN.

In one embodiment, the amount of polycarbonate used is in the range of 10 to 70 weight percent. More particularly, the amount of polycarbonate used is in the range of 20 to 65 weight percent. More particularly, the amount of polycarbonate used is in the range of 25 to 60 weight percent.

### SILICONE MATERIAL

In addition to the polyester and polycarbonate, the composition comprises a silicone material. The silicone material is required to have a silicone content that is higher than 15 weight percent.

In one embodiment, the silicone material can be a polyorganosiloxane-polycarbonate copolymer. The polydiorganosiloxane blocks comprise repeating structural units of the formula (sometimes referred to herein as "siloxane"): 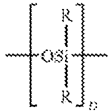 wherein each occurrence of R is same or different, and is a C₁₋₁₃ monovalent organic radical. For example, R may be a C₁₋₁₃ alkyl group, C₁₋₁₃ alkoxy group, C₂-₁₃ alkenyl group, C₂₋₁₃ alkenyloxy group, C₃₋₆ cycloalkyl group, C₃₋₆ cycloalkoxy group, C₆₋₁₀ aryl group, C₆₋₁₀ aryloxy group, C₇₋₁₃ aralkyl group, C₇₋₁₃ aralkoxy group, C₇₋₁₃ alkaryl group, or C₇₋₁₃ alkaryloxy group. Combinations of the foregoing R groups may be used in the same copolymer.

The value of D in 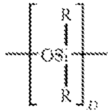 may vary widely depending on the type and relative amount of each component in the thermoplastic composition, the desired properties of the composition, and like considerations. Generally, D may have an average value of 2 to about 1000, specifically about 2 to about 500, more specifically about 5 to about 100. In one embodiment, D has an average value of about 10 to about 75, and in still another embodiment, D has an average value of about 40 to about 60. Where D is of a lower value, e.g., less than about 40, it may be desirable to use a relatively larger amount of the polycarbonate-polysiloxane copolymer. Conversely, where D is of a higher value, e.g., greater than about 40, it may be necessary to use a relatively lower amount of the polycarbonate-polysiloxane copolymer.

A combination of a first and a second (or more) polycarbonate-polysiloxane copolymers may be used, wherein the average value of D of the first copolymer is less than the average value of D of the second copolymer.

In one embodiment, the polydiorganosiloxane blocks are provided by repeating structural units of the formula: 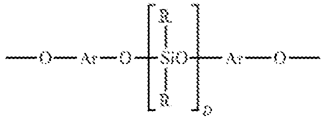 wherein D is as defined above; each R may be the same or different, and is as defined above; and Ar may be the same or different, and is a substituted or unsubstituted C₆₋₃₀ arylene radical, wherein the bonds are directly connected to an aromatic moiety. Suitable Ar groups in this formula may be derived from a C₆₋₃₀ dihydroxyarylene compound, for example a dihydroxyarylene compound of formula HO-A¹-Y¹-A²-OH, 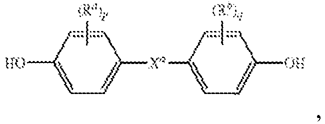 or 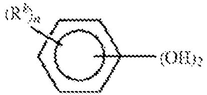 above. Combinations comprising at least one of the foregoing dihydroxyarylene compounds may also be used. Specific examples of suitable dihydroxyarlyene compounds are 1,1-bis(4-hydroxyphenyl)methane, 1,1-bis(4-hydroxyphenyl)ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl)cyclohexane, bis(4-hydroxyphenyl sulphide), and 1,1-bis(4-hydroxy-t-butylphenyl) propane. Combinations comprising at least one of the foregoing dihydroxy compounds may also be used.

Such units may be derived from the corresponding dihydroxy compound of the following formula: 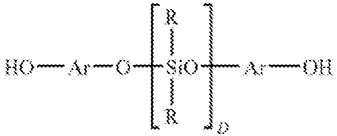 wherein Ar and D are as described above. Such compounds are further described in U.S. Pat. No. 4,746,701 to Kress et al. Compounds of this formula may be obtained by the reaction of a dihydroxyarylene compound with, for example, an alpha,omega-bisacetoxypolydiorangonosiloxane under phase transfer conditions.

In another embodiment the polydiorganosiloxane blocks comprise repeating structural units of the formula: 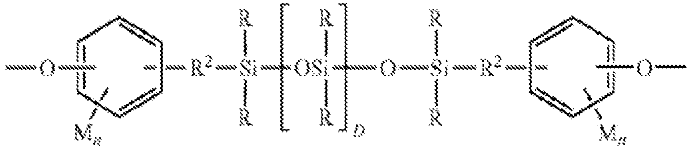 wherein R and D are as defined above. R² in this formula is a divalent C₂₋₈ aliphatic group. Each M in this formula may be the same or different, and may be a halogen, cyano, nitro, C₁₋₈ alkylthio, C₁₋₈ alkyl, C₁₋₈ alkoxy, C₂₋₈ alkenyl, C₂₋₈ alkenyloxy group, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkaryl, or C₇₋₁₂ alkaryloxy, wherein each n is independently 0, 1, 2, 3, or 4.

In one embodiment, M is an alkyl group such as methyl, ethyl, or propyl, an alkoxy group such as methoxy, ethoxy, or propoxy, or an aryl group such as phenyl or tolyl; R² is a dimethylene, trimethylene or tetramethylene group; and R is a C₁₋₈ alkyl, cyanoalkyl, or aryl such as phenyl, or tolyl. In another embodiment, R is methyl or a mixture of methyl and phenyl. In still another embodiment, M is methoxy, n is one, R² is a divalent C₁₋₃ aliphatic group, and R is methyl.

These units may be derived from the corresponding dihydroxy polydiorganosiloxane: 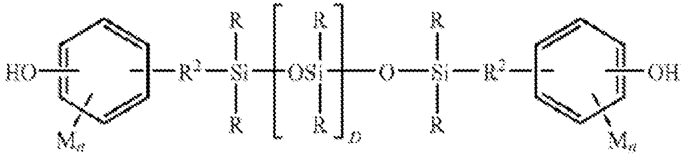 wherein R, D, M, R², and n are as described above.

Such dihydroxy polysiloxanes can be made by effecting a platinum catalyzed addition between a siloxane hydride of the formula: 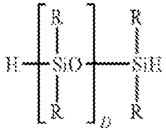 wherein R and D are as previously defined, and an aliphatically unsaturated monohydric phenol. Suitable aliphatically unsaturated monohydric phenols included, for example, eugenol, 2-alkylphenol, 4-allyl-2-methylphenol, 4-allyl-2-phenylphenol, 4-allyl-2-t-butoxyphenol, 4-phenyl-2-phenylphenol, 2-methyl-4-propylphenol, 2-allyl-4,6-dimethylphenol, 2-allyl-6-methoxy-4-methylphenol and 2-allyl-4,6-dimethylphenol. Mixtures comprising at least one of the foregoing may also be used.

A polycarbonate-polysiloxane copolymer may be manufactured by reaction of diphenolic polysiloxane with a carbonate source and a dihydroxy aromatic compound, optionally in the presence of a phase transfer catalyst as described above. Suitable conditions are similar to those useful in forming polycarbonates. For example, the copolymers are prepared by phosgenation, at temperatures from below 0 °C to about 100 °C, desirably about 25 °C to about 50 °C. Since the reaction is exothermic, the rate of phosgene addition may be used to control the reaction temperature. The amount of phosgene required will generally depend upon the amount of the dihydric reactants. Alternatively, the polycarbonate-polysiloxane copolymers may be prepared by co-reacting in a molten state, the dihydroxy monomers and a diaryl carbonate ester, such as diphenyl carbonate, in the presence of a transesterification catalyst as described above. Siloxane groups may also be present at or attached to the ends of the copolymer as well.

In the production of a polycarbonate-polysiloxane copolymer, the amount of dihydroxy polydiorganosiloxane is selected so as to provide the desired amount of polydiorganosiloxane units in the copolymer. The amount of polydiorganosiloxane units may vary widely, i.e., may be about 1 wt % to about 99 wt % of polydimethylsiloxane, or an equivalent molar amount of another polydiorganosiloxane, with the balance being carbonate units. The particular amounts used will therefore be determined depending on desired physical properties of the thermoplastic composition, the value of D (within the range of 2 to about 1000), and the type and relative amount of each component in the thermoplastic composition, including the type and amount of polycarbonate, type and amount of impact modifier, type and amount of polycarbonate-polysiloxane copolymer, and type and amount of any other additives. Suitable amounts of dihydroxy polydiorganosiloxane can be determined by one of ordinary skill in the art without undue experimentation using the guidelines taught herein. For example, the amount of dihydroxy polydiorganosiloxane may be selected so as to produce a copolymer comprising about 1 wt % to about 75 wt %, or about 1 wt % to about 50 wt % polydimethylsiloxane, or an equivalent molar amount of another polydiorganosiloxane. In one embodiment, the copolymer comprises about 5 wt % to about 40 wt %, optionally about 5 wt % to about 25 wt % polydimethylsiloxane, or an equivalent molar amount of another polydiorganosiloxane, with the balance being polycarbonate. In a particular embodiment, the copolymer may comprise about 20 wt % siloxane.

In specific embodiments, the polycarbonate is derived from a dihydroxy compound having the structure of the Formula: 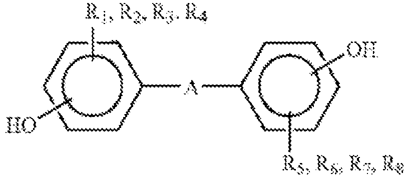 wherein R₁ through R₈ are each independently selected from hydrogen, halogen, nitro, cyano, C₁₋₂₀ alkyl, C₄₋₂₀ cycloalkyl, and C₆₋₂₀ aryl; and A is selected from a bond, -O-, -S-, -SO₂, C₁₋₁₂ alkyl, C₆₋₂₀ aromatic, and C₆₋₂₀ cycloaliphatic.

In specific embodiments, the dihydroxy compound of Formula (I) is 2,2-bis(4-hydroxyphenyl) propane (i.e. bisphenol-A or BPA). Other illustrative compounds of Formula (I) include: 2,2-bis(4-hydroxy-3-methylphenyl)propane; 2,2-bis(4-hydroxy-3-isopropylphenyl)propane; 2,2-bis(3-t-butyl-4-hydroxyphenyl)propane; 2,2-bis(3-phenyl-4-hydroxyphenyl)propane; 1,1-bis(4-hydroxyphenyl)cyclohexane; 4,4'dihydroxy-1,1-biphenyl; 4,4'-dihydroxy-3,3'-dimethyl-1,1-biphenyl; 4,4'-dihydroxy-3,3'-dioctyl-1,1-biphenyl; 4,4'-dihydroxydiphenylether; 4,4'-dihydroxydiphenylthioether; and 1,3-bis(2-(4-hydroxyphenyl)-2-propyl)benzene.

The polyorganosiloxane-polycarbonate can comprise 50 to 99 percent by weight of carbonate units and 1 to 50 percent by weight siloxane units. Within this range, the polyorganosiloxane- polycarbonate copolymer can comprise 70 to 98 percent by weight, more specifically 75 to 97 percent by weight of carbonate units and 2 to 30 percent by weight, more specifically 3 to 25 percent by weight siloxane units.

Polyorganosiloxane-polycarbonates can have a weight average molecular weight of 2,000 to 100,000 Daltons, specifically 5,000 to 50,000 Daltons as measured by gel permeation chromatography using a crosslinked styrene-divinyl benzene column, at a sample concentration of 1 milligram per milliliter, and as calibrated with polycarbonate standards.

The polyorganosiloxane-polycarbonate can have a melt volume flow rate, measured at 300°C/1.2 kg, of 1 to 50 cubic centimeters per 10 minutes (cc/10 min), specifically 2 to 30 cc/10 min. Mixtures of polyorganosiloxane-polycarbonates of different flow properties can be used to achieve the overall desired flow property.

In one embodiment, the polycarbonate-polydimethylsiloxane copolymer containing approximately 18 to 20 percent siloxane. The polycarbonate-polysiloxane copolymer has a weight average molecular weight of 28,000 to 32,000.

Specifically, the polycarbonate-siloxane block copolymer can have the following formula: 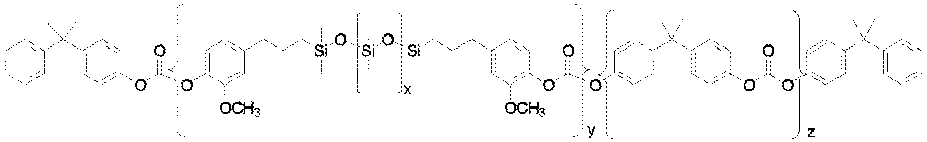 wherein x is 30-50, specifically about 40, y is 10-30, specifically about 20, and z is 45-60, specifically about 50 or 55.

In another embodiment, the silicone material can be a silicone rubber having grafting-active sites, also with the requirement that the silicone material has a silicone content that is higher than 15 weight percent. The preparation of such materials is described, for example, in U.S. Pat. No. 2,891,920, U.S. Pat. No. 3,294,725, DE-OS 3 631 540, EP 249964, EP 430134 and U.S. Pat. No. 4,888,388.

The silicone rubber is preferably prepared by emulsion polymerization, in which siloxane monomer units, crosslinking or branching agents and optionally grafting agents are employed. Siloxane monomer units which are employed are, for example, dimethylsiloxane or cyclic organosiloxanes having at least 3 ring members, preferably 3 to 6 ring members, such as, for example and preferably, hexamethylcyclotrisiloxane, octamethylcyclotetrasiloxane, decamethylcyclopentasiloxane, dodecamethylcyclohexasiloxane, trimethyl-triphenyl-cyclotrisiloxanes, tetramethyl-tetraphenyl-cyclotetrasiloxanes and octaphenylcyclotetrasiloxane. The organosiloxane monomers can be employed by themselves or in the form of mixtures with 2 or more monomers.

Silicone/acrylate rubbers are also suitable for the invention. The silicone/acrylate rubbers are preferably composite rubbers having grafting-active sites containing a silicone rubber, the two rubber components mentioned penetrating each other in the composite rubber, so that they cannot be separated substantially from one another. Silicone/acrylate rubbers are known and are described, for example, in U.S. Pat. No. 5,807,914, EP 430134 and U.S. Pat. No. 4,888,388.

Suitable polyalkyl(meth)acrylate rubber components of the silicone/acrylate rubbers according can be prepared, for example, from methacrylic acid alkyl esters and/or acrylic acid alkyl esters, a crosslinking agent and a grafting agent. Preferred methacrylic acid alkyl esters and/or acrylic acid alkyl esters by way of example here are the C₁ to C₈-alkyl esters, for example methyl, ethyl, n-butyl, t-butyl, n-propyl, n-hexyl n-octyl, n-lauryl and 2-ethylhexyl esters; haloalkyl esters, preferably halo-C₁-C₈-alkyl esters, such as chloroethyl acrylate, and mixtures of these monomers. n-Butyl acrylate is particularly preferred.

Crosslinking agents which can be employed for the polyalkyl(meth)acrylate rubber component of the silicone/acrylate rubber include monomers having more than one polymerizable double bond. Preferred examples of crosslinking monomers are esters of unsaturated monocarboxylic acids having 3 to 8 C atoms and unsaturated monohydric alcohols having 3 to 12 C atoms, or of saturated polyols having 2 to 4 OH groups and 2 to 20 C atoms, such as ethylene glycol dimethacrylate propylene glycol dimethacrylate, 1,3-butylene glycol dimethacrylate and 1,4-butylene glycol dimethacrylate. The crosslinking agents can be used by themselves or in mixtures of at least two crosslinking agents.

Preferred grafting agents by way of example are allyl methacrylate, triallyl cyanurate, triallyl isocyanurate or mixtures thereof. Allyl methacrylate can also be employed as the crosslinking agent. The grafting agents can be used by themselves or in mixtures of at least two grafting agents.

The amount of crosslinking agent and grafting agent is preferably 0.1 to 20 wt. %, based on the total weight of the polyalkyl(meth)acrylate rubber component of the silicone/acrylate rubber.

The silicone/acrylate rubber can be prepared by first preparing the silicone rubber as described above as an aqueous latex. This latex is then enriched with the methacrylic acid alkyl esters and/or acrylic acid alkyl esters to be used, the crosslinking agent and the grafting agent, and a polymerization is carried out. An emulsion polymerization initiated by free radicals, for example by a peroxide initiator or an azo or redox initiator, is preferred. The use of a redox initiator system, specifically of a sulfoxylate initiator system prepared by combination of iron sulfate, disodium ethylenediaminetetraacetate, Rongalit and hydroperoxide, is particularly preferred.

The grafting agent used in the preparation of the silicone rubber leads in this context to the polyalkyl(meth)acrylate rubber content being bonded covalently to the silicone rubber content. During the polymerization, the two rubber components penetrate each other and in this way form the composite rubber, which can no longer be separated into its constituents of silicone rubber component and polyalkyl(meth)acrylate rubber component after the polymerization.

For preparation of the silicone(/acrylate) graft rubbers mentioned above, the monomers are advantageously grafted on to the rubber base. In this context, the polymerization methods described, for example, in EP 249964, EP 430134 and U.S. Pat. No. 4,888,388 can be used.

For example, the grafting polymerization can suitably be carried out by the following polymerization method: The desired vinyl monomers B.1 are polymerized on to the graft base, which is in the form of an aqueous latex, in a one- or multistage emulsion polymerization initiated by free radicals. The grafting efficiency in this context should preferably be as high as possible and is preferably greater than or equal to 10%. The grafting efficiency depends decisively on the grafting agents (V) and (VII) used. After the polymerization to give the silicone(/acrylate) graft rubber, the aqueous latex is introduced into hot water, in which metal salts, such as e.g. calcium chloride or magnesium sulfate, have been dissolved beforehand. The silicone(/acrylate) graft rubber coagulates during this procedure and can than be separated.

The methacrylic acid alkyl ester and acrylic acid alkyl ester graft rubbers mentioned are commercially obtainable, for example, from Mitsubishin Rayon Co. as Metablen® S-2001 (10% siloxane) and S-2030 (30% siloxane).

In one embodiment, the silicone material is a polyorganosiloxane-polycarbonate copolymer. In a particular embodiment, the polyorganosiloxane-polycarbonate copolymer is Bisphenol A polycarbonate-polydimethylsiloxane copolymer, CAS Reg. No. 202483-49-6 comprising about 20% by weight of siloxane, 80% by weight of BPA polycarbonate. The amount of polyorganosiloxane-polycarbonate copolymer is from about 20 to about 40 weight percent. In another embodiment, the amount of polyorganosiloxane-polycarbonate copolymer is from about 22 to about 38 weight percent. In another embodiment, the amount of polyorganosiloxane-polycarbonate copolymer is from about 24 to about 36 weight percent.

In another embodiment, the silicone material is a silicone rubber. In one embodiment, the silicone material is a methacrylate-acrylate-siloxane copolymer containing 10% siloxane by weight. In another embodiment, the silicone material is a methacrylate-acrylate-siloxane copolymer containing 30% siloxane by weight. The amount of silicone rubber is in the amount of from about 1 to about 5 weight percent. In one embodiment, the amount of silicone rubber is in the amount of from about 2 to about 5 weight percent.

### POLYPHOSPHONATE

In addition to the polyalkylene terephthalate, polycarbonate, and silicone material, the composition comprises a polyphosphonate such as described in US2007203269, WO2007022008 WO2007065094 WO2009018336.

In particular, the polyphosphonate is a homopolymer. The polyphosphonate homopolymer is typically the product of bisphenol A and tetraphenyl phosphonium phenolate, such as FRX-100, the synthesis of which is described in US Patent Pub. No. 2011/0237695.

Thus, according to US Patent Pub. No. 2011/0237695, the polyphosphonate homopolymer known by the name FRX-100, is prepared by introducing 2,2-bis-(4-hydroxyphenyl) propane (bisphenol A, 1.308 kg, 5.737 mol), 120 mg Sodium phenolate (NaOPh) catalyst, 1467 g (5.915 mol) methylphosphonic acid diphenyl ester and 225 mg tetraphenylphosphonium phenolate to a 6 L reactor equipped with a distillation column and mechanical stirrer. The mixture is heated from 250 to 300 °C, while the pressure is reduced from 150 to 0.4 mm Hg over about 8-9 hours. Approximately 1374 g of distillate is collected over the course of the reaction. A noticeable, rapid increase in solution viscosity of the melt is observed over the last hour of the reaction. At the end, the torque (as measurement of melt viscosity and therefore molecular weight) was 12.5.+-.0.4 at 300 °C. with a stirrer speed of 110 rpm. The polymer is extruded out of the reactor into a water bath to form a strand and subsequently pelletized. The polymer is transparent, colorless and tough. It exhibited a Tg of 102 °C. The product is not fully soluble in methylene chloride after 12 hours. The percentage of phosphorous in this polymer is 10.8% by weight. The molecular weight is measured by gel permeation chromatography using a refractive index detector. Based on a polystyrene standard, the polyphosphonate exhibits a Mn of 9379, a Mw of 43480 and a polydispersity of 4.6.

In one embodiment, the amount of polyphosphonate is from about 3 to 40 weight percent. More particularly, the amount of polyphosphonate is from about 5 to 25 weight percent.
More particularly, the amount of polyphosphonate is from about 7 to 17 weight percent.

### ANTIDRIP AGENT

In addition to the polyalkylene terephthalate, the composition contains an antidrip agent, such as, for example a fibril forming or non-fibril forming fluoropolymer such as polytetrafluoroethylene (PTFE). The anti-drip agent may be encapsulated by a rigid copolymer, for example styrene acrylonitrile resin (SAN). PTFE encapsulated in SAN is known as TSAN. Encapsulated fluoropolymers may be made by polymerizing the encapsulating polymer in the presence of the fluoropolymer, for example an aqueous dispersion.

The antidrip agent is generally used in the compositions of the invention in amounts of about 0.1 to about 5 parts by weight, more preferably about 0.25 to 2.5 parts by weight, and more preferably about 0.5 to 1.5 parts by weight.

### ADDITIONAL COMPONENTS

As indicated by the previous embodiment, other additives can be added to the modified polyalkylene terephthalate-polycarbonate thermoplastic blends for the purpose of imparting properties desirable in the product being made. Additives are ordinarily incorporated into polymer compositions with the proviso that the additives are selected so as to not significantly adversely affect the desired properties of the composition, for example, impact, flexural strength, color, and the like. Such additives can be mixed at a suitable time during the mixing of the components for forming the composition. Possible additives include additional impact modifiers, fillers, reinforcing agents, anti-oxidants, heat stabilizers, light stabilizers, ultraviolet light (UV) absorbers, plasticizers, lubricants, mold release agents, antistatic agents, colorants, blowing agents, melt strength additives, flame retardants, and anti-drip agents. A good source for information relating to additives is the Plastics Additives Handbook, 6th ed. (Hans Zweifel, Ed., 2009).

Thus, in addition to the polyalkylene terephthalate, polycarbonate, silicone material, and polyphosphonate, the further comprises an impact modifier. Many impact modifiers are known and are commercially available. Such impact modifiers are typically high molecular weight elastomeric materials derived from olefins, monovinyl aromatic monomers, acrylic and methacrylic acids and their ester derivatives, as well as conjugated dienes. The polymers formed from conjugated dienes can be fully or partially hydrogenated. The elastomeric materials can be in the form of homopolymers or copolymers, including random, block, radial block, graft, and core-shell copolymers. Combinations of such impact modifiers can be used.

An example of specific type of impact modifier is an elastomer-modified graft copolymer comprising (i) an elastomeric (i.e., rubbery) polymer substrate having a Tg less than about 10° C., more specifically less than about -10 °C., or more specifically about -40 to -80 °C, and (ii) a rigid polymeric superstrate grafted to the elastomeric polymer substrate. Materials suitable for use as the elastomeric phase include, for example, conjugated diene rubbers, for example polybutadiene and polyisoprene; copolymers of a conjugated diene with less than about 50 wt. % of a copolymerizable monomer, for example a monovinylic compound such as styrene, acrylonitrile, n-butyl acrylate, or ethyl acrylate; olefin rubbers such as ethylene propylene copolymers (EPR) or ethylene-propylene-diene monomer rubbers (EPDM); ethylene-vinyl acetate rubbers; silicone rubbers; elastomeric C₁₋₈ alkyl(meth)acrylates; elastomeric copolymers of C₁₋₈ alkyl(meth)acrylates with butadiene and/or styrene; or combinations comprising at least one of the foregoing elastomers. Materials suitable for use as the rigid phase include, for example, monovinyl aromatic monomers such as styrene and alpha-methyl styrene, and monovinylic monomers such as acrylonitrile, acrylic acid, methacrylic acid, and the C₁ -C₆ esters of acrylic acid and methacrylic acid, specifically methyl methacrylate.

Specific exemplary elastomer-modified graft copolymers include those formed from styrene-butadiene-styrene (SBS), styrene-butadiene rubber (SBR), styrene-ethylene-butadiene-styrene (SEBS), ABS (acrylonitrile-butadiene-styrene), acrylonitrile-ethylene-propylene-diene-styrene (AES), styrene-isoprene-styrene (SIS), methyl methacrylatebutadiene-styrene (MBS), and styrene-acrylonitrile (SAN).

Other impact modifiers include an epoxy-functional copolymer comprising units derived from a C2-20 olefin and units derived from a glycidyl(meth)acrylate. Exemplary olefins include ethylene, propylene, butylene, and the like. The olefin units can be present in the copolymer in the form of blocks, e.g., as polyethylene, polypropylene, polybutylene, and the like blocks. It is also possible to use mixtures of olefins, i.e., blocks containing a mixture of ethylene and propylene units, or blocks of polyethylene together with blocks of polypropylene.

In addition to glycidyl(meth)acrylate units, the copolymers can further comprise additional units, for example C1-4 alkyl(meth)acrylate units. In one embodiment, the impact modifier is terpolymeric, comprising polyethylene blocks, methyl acrylate blocks, and glycidyl methacrylate blocks. Specific impact modifiers are a co- or ter-polymer including units of ethylene, glycidyl methacrylate (GMA), and methyl acrylate, available under the trade name LOTADER® polymer, sold by Arkema. The terpolymers comprise, based on the total weight of the copolymer, 0.3 to 12 wt. % of glycidyl methacrylate units, more specifically 0.4 to 11 wt. % of glycidyl methacrylate units, even more specifically 0.5 to 10 wt. % of glycidyl methacrylate units. Suitable impact modifiers include the ethylene-methyl acrylate-glycidyl methacrylate terpolymer comprising 8 wt. % glycidyl methacrylate units available under the trade name LOTADER AX8900.

Specifically, such impact modifiers include methyl meth(acrylate)-butadiene-styrene, acrylonitrile-butadiene-styrene, styrene-ethylene/butylene-styrene, ethylene-glycidyl methacrylate-methyl acrylate, ethylene-glycidyl(meth)acrylate-methyl acrylate impact modifier, and combinations thereof.

Combinations of additives can be used, for example, an antioxidant, a UV absorber, and an impact modifier. The total amount of additives (other than any impact modifier, filler, or reinforcing agents) is generally 0.01 to 15 percent by weight, based on the total weight of the composition.

### EMBODIMENTS

In one aspect, thermoplastic composition comprising, based on total weight of the composition:
from 10 to 50 weight percent of a terephthalate-based polyester;
from 15 to 65 weight percent of a polycarbonate;
a silicone material where the siloxane content is greater than 15 weight percent wherein the silicone material is selected from the group consisting of: (i) from 20 to 40 weight percent of a polyorganosiloxane-polycarbonate copolymer; and (ii) from 1 to 5 weight percent of a silicone rubber; or a mixture thereof;
from 3 to 40 percent of a bisphenol A-based polyphosphonate flame retardant, wherein the phosphorous content is at least 2 percent by weight and the molecular weight of the polyphosphonate is more than 20000; and
from 0.01 to 5 weight percent of an antidripping agent;
and wherein the composition has:
a notched Izod impact strength of greater than 500 J/m measured at room temperature, according to ASTM D256 on a sample bar molded from the composition and having a thickness of 3.2 mm;
a Vicat softening temperature higher than 120 °C in accordance with ASTM D1525 on a sample bar molded from the composition and having a thickness of 3.2 mm; and
a UL-94 flammability rating of V0 measured on a molded sample with a thickness of 1.5 mm.

In one embodiment of this aspect, the polyalkylene terephthalate is PBT or a combination of PBTs. In these and other embodiments, about 10 to about 50 parts by weight of PBT or a combination of PBTs is used. More particularly, about 15 to about 40 parts by weight of PBT or a combination of PBTs is used. More particularly, about 17 to about 37 parts by weight of PBT or a combination of PBTs is used.

In a particular embodiment, the polyalkylene terephthalate is a PBT having an intrinsic viscosity of 0.4 to 1.4cm³/g. As used herein, intrinsic viscosity is measured in a 60:40 mixture of phenol/tetrachloroethane mixture at 25°C according to ASTM D 2857-70 using a viscosimeter according to DIN 51562. More particularly, the composition of the present invention comprises a mixture of a first polybutylene terephthalate, having an intrinsic viscosity of >0.8 to 1.4 cm³/g and a second polybutylene terephthalate having an intrinsic viscosity of 0.4 to 0.8 cm³/g.

In another embodiment, the polycarbonate is a 2,2-bis(4-hydroxyphenyl)propane (bisphenol-A) polycarbonate, commercially available under the trade designation LEXAN or a 2-phenyl-3,3-bis(4-hydroxyphenyl)phthalimidine (PPPBP)/bisphenol A (BPA) copolycarbonate.
More particularly, the amount of polycarbonate used is in the range of 20 to 65 weight percent. More particularly, the amount of polycarbonate used is in the range of 25 to 60 weight percent.

In another embodiment, the silicone material is a polyorganosiloxane-polycarbonate copolymer. In a particular embodiment, the polyorganosiloxane-polycarbonate copolymer is Bisphenol A polycarbonate-polydimethylsiloxane copolymer, CAS Reg. No. 202483-49-6 comprising about 20% by weight of siloxane, 80% by weight of BPA polycarbonate. The amount of polyorganosiloxane-polycarbonate copolymer is from about 20 to about 40 weight percent. In another embodiment, the amount of polyorganosiloxane-polycarbonate copolymer is from about 22 to about 38 weight percent. In another embodiment, the amount of polyorganosiloxane-polycarbonate copolymer is from about 24 to about 36 weight percent.

In another embodiment, the silicone material is a silicone rubber. In one embodiment, the silicone material is a methacrylate-acrylate-siloxane copolymer containing 10% siloxane by weight. In another embodiment, the silicone material is a methacrylate-acrylate-siloxane copolymer containing 30% siloxane by weight. The amount of silicone rubber is in the amount of from about 1 to about 5 weight percent. In one embodiment, the amount of silicone rubber is in the amount of from about 2 to about 5 weight percent.

In another embodiment, the polyphosphonate homopolymer is the product of bisphenol A and tetraphenyl phosphonium phenolate, such as FRX-100. The amount of polyphosphonate is from about 3 to 40 weight percent. More particularly, the amount of polyphosphonate is from about 5 to 25 weight percent. More particularly, the amount of polyphosphonate is from about 7 to 17 weight percent.

In another embodiment, the antidrip agent is polytetrafluoroethylene (PTFE)which may be encapsulated by a rigid copolymer, for example styrene acrylonitrile resin (SAN). PTFE encapsulated in SAN is known as TSAN. The antidrip agent is generally used in the compositions of the invention in amounts of about 0.1 to about 5 parts by weight, more preferably about 0.25 to 2.5 parts by weight, and more preferably about 0.5 to 1.5 parts by weight.

In another embodiment of the thermoplastic composition, the polycarbonate is a bisphenol A-based polycarbonate. In another embodiment, the thermoplastic composition comprises from 20 to 65 weight percent of a bisphenol A-based polycarbonate.

In another embodiment, of the thermoplastic composition, the terephthalate-based polyester is a polyethylene terephthalate or a poly(1,4-butylene) terephthalate or a mixture thereof. In another embodiment, the thermoplastic composition comprises from 15 to 40 weight percent of PBT or PET or a mixture thereof.

In another embodiment, of the thermoplastic composition, the silicone material is selected form the group consisting of a polycarbonate-polysiloxane copolymer and a methacrylate-acrylate-siloxane copolymer, or a mixture thereof. In another embodiment, the thermoplastic composition comprises from 20 to 40 weight percent of a polycarbonate-polysiloxane copolymer, wherein the polycarbonate is a bisphenol A-based polycarbonate. In another embodiment, the thermoplastic composition comprises from 1 to 5 weight percent of a methacrylate-acrylate-siloxane copolymer.

In another embodiment, thermoplastic composition comprises:
from 15 to 45 weight percent of a PBT;
from 20 to 65 weight percent of a polycarbonate which is selected from bisphenol A polycarbonate and 2-phenyl-3,3-bis(4-hydroxyphenyl)phthalimidine (PPPBP)/bisphenol A (BPA) copolycarbonate, or a combination thereof;
a silicone material where the siloxane content is greater than 15 weight percent wherein the silicone material is selected from the group consisting of: (i) from 20 to 40 weight percent of a polyorganosiloxane-polycarbonate copolymer; and (ii) from 1 to 5 weight percent of a silicone rubber; or a mixture thereof;
from 5 to 25 percent of a bisphenol A-based polyphosphonate flame retardant, wherein the phosphorous content is at least 2 percent by weight and the molecular weight of the polyphosphonate is more than 20000; and
from 0.5 to 2 weight percent of an antidripping agent;
and wherein the composition has:
a notched Izod impact strength of greater than 500 J/m measured at room temperature, according to ASTM D256 on a sample bar molded from the composition and having a thickness of 3.2 mm;
a Vicat softening temperature higher than 120 °C in accordance with ASTM D1525 on a sample bar molded from the composition and having a thickness of 3.2 mm; and
a UL-94 flammability rating of V0 measured on a molded sample with a thickness of 1.5 mm.

In another embodiment, thermoplastic composition comprises:
from 17 to 37 weight percent of a PBT;
from 25 to 60 weight percent of a polycarbonate which is selected from bisphenol A polycarbonate and 2-phenyl-3,3-bis(4-hydroxyphenyl)phthalimidine (PPPBP)/bisphenol A (BPA) copolycarbonate, or a combination thereof;
a silicone material where the siloxane content is greater than 15 weight percent wherein the silicone material is selected from the group consisting of: (i) from 22 to 38 weight percent of a polyorganosiloxane-polycarbonate copolymer; and (ii) from 1 to 5 weight percent of a silicone rubber; or a mixture thereof;
from 7 to 17 percent of a bisphenol A-based polyphosphonate flame retardant, wherein the phosphorous content is at least 2 percent by weight and the molecular weight of the polyphosphonate is more than 20000; and
from 0.5 to 2 weight percent of an antidripping agent which is poly(tetrafluoro ethylene) : styrene-acrylonitrile 50:50;
and wherein the composition has:
a notched Izod impact strength of greater than 500 J/m measured at room temperature, according to ASTM D256 on a sample bar molded from the composition and having a thickness of 3.2 mm;
a Vicat softening temperature higher than 120 °C in accordance with ASTM D1525 on a sample bar molded from the composition and having a thickness of 3.2 mm; and
a UL-94 flammability rating of V0 measured on a molded sample with a thickness of 1.5 mm.

In another embodiment, thermoplastic composition comprises:
from 17 to 37 weight percent of a PBT;
from 25 to 60 weight percent of a polycarbonate which is selected from bisphenol A polycarbonate and 2-phenyl-3,3-bis(4-hydroxyphenyl)phthalimidine (PPPBP)/bisphenol A (BPA) copolycarbonate, or a combination thereof;
a silicone material where the siloxane content is greater than 15 weight percent wherein the silicone material is from 22 to 38 weight percent of a polyorganosiloxane-polycarbonate copolymer;
from 7 to 17 percent of a bisphenol A-based polyphosphonate flame retardant, wherein the phosphorous content is at least 2 percent by weight and the molecular weight of the polyphosphonate is more than 20000; and
from 0.5 to 2 weight percent of an antidripping agent which is poly(tetrafluoro ethylene) : styrene-acrylonitrile 50:50;
and wherein the composition has:
a notched Izod impact strength of greater than 500 J/m measured at room temperature, according to ASTM D256 on a sample bar molded from the composition and having a thickness of 3.2 mm;
a Vicat softening temperature higher than 120 °C in accordance with ASTM D1525 on a sample bar molded from the composition and having a thickness of 3.2 mm; and
a UL-94 flammability rating of V0 measured on a molded sample with a thickness of 1.5 mm.

In another embodiment, thermoplastic composition comprises:
from 17 to 37 weight percent of a PBT;
from 25 to 60 weight percent of a polycarbonate which is selected from bisphenol A polycarbonate and 2-phenyl-3,3-bis(4-hydroxyphenyl)phthalimidine (PPPBP)/bisphenol A (BPA) copolycarbonate, or a combination thereof;
a silicone material where the siloxane content is greater than 15 weight percent wherein the silicone material is from 1 to 5 weight percent of methacrylate-acrylate-siloxane copolymer; or a mixture thereof;
from 7 to 17 percent of a bisphenol A-based polyphosphonate flame retardant, wherein the phosphorous content is at least 2 percent by weight and the molecular weight of the polyphosphonate is more than 20000; and
from 0.5 to 2 weight percent of an antidripping agent which is poly(tetrafluoro ethylene) : styrene-acrylonitrile 50:50;
and wherein the composition has:
a notched Izod impact strength of greater than 500 J/m measured at room temperature, according to ASTM D256 on a sample bar molded from the composition and having a thickness of 3.2 mm;
a Vicat softening temperature higher than 120 °C in accordance with ASTM D1525 on a sample bar molded from the composition and having a thickness of 3.2 mm; and
a UL-94 flammability rating of V0 measured on a molded sample with a thickness of 1.5 mm.

In another aspect, the invention provides an article prepared from the composition of claim 1. The article can be formed by methods widely available in the art, for instance by injection molding, extrusion, or injection blow molding, for targeted uses including housing parts for electronics devices or business equipment.

The following examples illustrate the scope of the invention. The examples and preparations which follow are provided to enable those skilled in the art to more clearly understand and to practice the present invention. They should not be considered as limiting the scope of the invention, but merely as being illustrative and representative thereof.

### EXAMPLES

The examples of the compositions of the present invention, annotated hereinafter as "E." and their comparative examples, annotated hereinafter as "CE", employed the materials listed in Table 1. All percent by weights employed in the examples are based on the percent by weight of the entire composition except where stated otherwise.

**Table 1**

| Component | Trade Name and Supplier |
|---|---|
| Polcarbonate I | Polycarbonate derived from bisphenol A, CAS Reg. No. 111211-39-3, with a molecular weight of 29.9 K, from SABIC Innovative Plastics, Inc. |
| Polycarbonate II | Polycarbonate derived from bisphenol A, CAS Reg. No. 111211-39-3, with a molecular weight of 36.5 K., from SABIC Innovative Plastics, Inc. |
| XHT | PPPBP/BPA copolycarbonate (35 mol % PPPBP, 25 K Mw, from SABIC Innovative Plastics, Inc. |
| PBT | Polybutylene(1,4-butylene terephthalate), CAS Reg. No. 26062-94-2 with an intrinsic viscosity of 1.1 dL/g as measured in a 60:40 phenol/tetrachloroethane |
| PET | Polyethylene terephthalate), CAS Reg. No. 25038-59-9 with an intrinsic viscosity of 0.80 to 0.86 dL/g as measured in a 60:40 phenol/tetrachloroethane, available Foshan BG-03-80 |
| EXL-PC | Bisphenol A polycarbonate-polydimethylsiloxane copolymer, CAS Reg. No. 202483-49-6 comprising about 20% by weight of siloxane, 80% by weight of BPA polycarbonate, available from SABIC Innovative Plastics, INc. |
| Siloxane II (S-2001) | Methacrylate-acrylate-siloxane copolymer, CAS Reg. No. 143106-82-5, 10% by weight of siloxane, available from Mitsubishi rayon Co., Ltd. |
| Siloxane III (S-2030) | Methacrylate-acrylate-siloxane copolymer, 30% by weight of siloxane, available from Mitsubishi Rayon Co., Ltd. |
| MBS | Methylamethacrylate-butadiene styrene copolymer, CAS Reg. No. 25053-09-2, available as Paraloid EXL-2650A from the Dow Chemical Company |
| FR | Polyphosphonate, CAS Reg. No. 68664-06-2 available from FRX Polymers as Nofia™ CO300 |
| BPADP | Bisphenol A bis-diphenylphosphate, CAS Reg. No. 181028-79-5, commercially available from DAIHACHI Chemical Industry Co., Ltd. Under the tradename of CR741. |
| S-BPADP | Bisphenol A bis-diphenylphosphinate, CAS Reg. No. 139189-30-3, commercially available from YOKE Co. Ltd as HPP. |
| Polytetrafluoroethylene | PTFE, CAS Reg. No. 9002-84-0, obtained from SABIC Innovative Plastics. |
| Antioxidant | Tetrakis(methylene(3,5di-tert-butyl-4-hydroxyhydrocinnamate)methane, CAS Reg. No. 6683-19-8, available from Ciba as Antoxidant 1010 |
| Quencher | Monozinc Phosphate, CAS Reg. No. 13598-37-3, available from budenheim Iberica as Z21-82 |
| Anti-UV | 2-(2'-Hydroxy-5-t-octylphenyl)-benzotriazole, CAS reg. No. 3147-759 available from Ciba as Cyasorb UV 5411 |

### COMPOSITION PROCESSING AND TESTING

All components were dry-blended. The resulting blend was fed to a hopper of 37 mm Toshiba TEM-37BS Twin Screw Extruder with a vacuum vented mixing screw, and set at a cylinder temperature of 250°C and 150 to 350 rpm screw speed. The liquid flame retardant (BPADP) was added to the middle part of the extruder from a liquid feed pump while other raw materials were added at the throat of the extruder thereof. The composition was melt-kneaded and extruded. The extrudate was cooled through a water bath prior to pelletizing.

After drying the obtained pellets at 120°C for 4 hours, all the testing specimens were prepared in accordance with ASTM standards from the pellets using a 150 T injection molding machine at a melt temperature 255°C and at mold temperature 80 °C. The samples were tested for various properties using the standards shown in Table 2.

**Table 2**

| Property | Standard | Conditions | Specimen Type | Units |
|---|---|---|---|---|
| MFR | ASTM D1238 | 265 °C/5kg | Granule | g/10 mins |
| Notched Izod | ASTM D-256 | 23 °C, 3.2 mm | Bar -63.5 x 12.7 x 3.2 mm | J/m |
| HDT | ASTM 648 | 1.82 MPa / 3.2 mm | Bar -127 x 12.7 x 3.2 mm | °C |
| Vicat | ASTM 1525 | 50 N -120 °C/hour | Bar -63.5 x 12.7 x 3.2 mm | °C |
| UL | UL 94 | 1.50 mm thickness | Bar -127 x 12.7 x 1.50 mm | V0, V1, V2 |

### RESULTS

The results are summarized in Table 3. In CE1-CE4, a PC/polyester composite material with high polyester loading level (>20%) and well balanced mechanical/FR performance were not achieved by using a conventional small molecule/oligomeric phosphorus FR additive such as BPADP. This result is perhaps due to the poor impact and flame resistance of the polyester component. Replacing BPADP which is a liquid with a solid FR additive such as S-BPADP helped improve the impact resistance to a certain extent, but use of S-BPADP caused a failure in both the FR rating and heat resistance (Vicat >120 °C).

**Table 3**

| Component | E1 | E2 | E3 | E4 | E5 | E6 | CE1 | CE2 | CE3 | CE4 | CE5 | CE6 | CE7 |
|---|---|---|---|---|---|---|---|---|---|---|---|---|---|
| PC1 | 45.13 | 37.63 | 26.63 | 59.63 | | | 45.13 | 45.13 | 37.63 | 26.63 | 58.63 | 58.63 | 16.63 |
| PC2 | | | | | 16.13 | 17.13 | | | | | | | |
| XHT | | | | | 20 | 20 | | | | | | | |
| PBT | 20 | 25 | 30 | 25 | | | 20 | 20 | 25 | 30 | 25 | 25 | 40 |
| PET | | | | | 20 | 20 | | | | | | | |
| EXL-PC | 25 | 25 | 30 | | 35 | 30 | 25 | 25 | 25 | 30 | | | 30 |
| S2030 | | | | 4 | | | | | | | | | |
| S2001 | | | | | | | | | | | 4 | | |
| MBS | | | | | | 2 | | | | | | 4 | |
| FRX100 | 8.5 | 11 | 12 | 10 | 7.5 | 9.5 | | | | | 11 | 11 | 12 |
| BPADP | | | | | | | 8.5 | | 11 | 12 | | | |
| S-BPADP | | | | | | | | 8.5 | | | | | |
| TSAN | 0.8 | 0.8 | 0.8 | 0.8 | 0.8 | 0.8 | 0.8 | 0.8 | 0.8 | 0.8 | 0.8 | 0.8 | 0.8 |
| Properties | | | | | | | | | | | | | |
| MFR@265°C, 5kg, g/10min | 25.8 | 19.6 | 26.9 | 40.9 | 21.6 | 22.5 | 34.8 | 21.9 | 33.2 | 38.7 | 35.2 | 27.7 | 46.2 |
| HDT 1.82Mpa, 3.2mm °C | 92 | 92 | 90 | 90 | 112 | 106 | 74 | 84 | 71 | 73 | 91 | 92 | 85 |
| Vicat Soften Temp B/120 °C | 121 | 121 | 121 | 121 | 139 | 139 | 97 | 114 | 96 | 95 | 122 | 124 | 117 |
| INI@ 23 °C (J/m) | 834 | 677 | 621 | 543 | 656 | 605 | 321 | 429 | 71 | 60 | 114 | 101 | 73 |
| VX-1.5mm- UL Rating | V0 | V0 | V0 | V0 | V0 | V0 | V0 | V1 | V1 | V1 | V1 | V1 | V1 |

In contrast, robust FR (V0-1.5mm) and mechanical performance were achieved (NII > 500 J/m; Vicat >120 °C) by using a polymeric FR additive such as FRX100 as in E1-E6, together with a silicone impact modifier with siloxane content higher than 15% such as EXL-PC (20% siloxane) and S-2030 (30% siloxane), simultaneously with up to 30% polyester loading. This unique FR/impact modifier package is suited for other polyesters or polycarbonate copolymer resins, further improving the versatility of the composition to meet the requirement of different applications.

For example, E5 and E6 with PET and XHT as the high heat resin component showed excellent heat resistance (Vicat > 130 °C) while maintaining all the other desirable properties (NII > 500 J/m; V0-1.5mm, good flow). This balanced performance was only observed when the impact modifier was silicone based or if the siloxane content was higher than 15%. CE5 and CE6, in which the impact modifier was not silicone based (CE5) and the siloxane content was lower than 15% (CE6) did not meet the performance standards. Polyester content was another key factor that influenced the overall performance of the molded articles. As shown in CE7, if the loading level of polyester exceeded the limitation requirement of 35%, all important performance standards including heat, FR and impact were not met.

The invention has been described with reference to various specific embodiments and techniques. It should be understood that many variations and modifications may be made while remaining within the scope of the invention. It will be obvious to one of skill in the art that changes and modifications may be practiced within the scope of the appended claims. The above description is intended to be illustrative and not restrictive. The scope of the invention should, therefore, be determined not with reference to the above description, but should instead be determined with reference to the following appended claims, along with the full scope of equivalents to which such claims are entitled.

## Claims

1. A thermoplastic composition comprising, based on total weight of the composition:
from 10 to 50 weight percent of a terephthalate-based polyester;
from 15 to 65 weight percent of a polycarbonate;
a silicone material selected from the group consisting of: (i) from 20 to 40 weight percent of a polyorganosiloxane-polycarbonate copolymer; and (ii) from 1 to 5 weight percent of a silicone rubber; or a mixture thereof, wherein the siloxane content of the silicone material is greater than 15 weight percent;
from 3 to 40 percent of a bisphenol A-based polyphosphonate flame retardant, wherein the phosphorous content is at least 2 percent by weight and the molecular weight of the polyphosphonate is more than 20000; wherein the molecular weight was determined as presented in the description and
from 0.01 to 5 weight percent of an antidripping agent;
and wherein the composition has:
a notched Izod impact strength of greater than 500 J/m measured at room temperature, according to ASTM D256 on a sample bar molded from the composition and having a thickness of 3.2 mm;
a Vicat softening temperature higher than 120 °C in accordance with ASTM D1525 on a sample bar molded from the composition and having a thickness of 3.2 mm; and
a UL-94 flammability rating of V0 measured on a molded sample with a thickness of 1.5 mm.

2. The thermoplastic composition of claim 1, wherein the polycarbonate is a bisphenol A-based polycarbonate.

3. The thermoplastic composition of claim 2, comprising from 20 to 65 weight percent of a bisphenol A-based polycarbonate.

4. The thermoplastic composition of claim 1, wherein the terephthalate-based polyester is a polyethylene terephthalate or a poly(1,4-butylene) terephthalate or a mixture thereof.

5. The thermoplastic composition of claim 4, comprising from 15 to 40 weight percent of PBT or PET or a mixture thereof.

6. The thermoplastic composition of claim 1, wherein the silicone material is selected form the group consisting of a polycarbonate-polysiloxane copolymer and a methacrylate-acrylate-siloxane copolymer, or a mixture thereof.

7. The thermoplastic composition of claim 6, comprising from 20 to 40 weight percent of a polycarbonate-polysiloxane copolymer, wherein the polycarbonate is a bisphenol A-based polycarbonate.

8. The thermoplastic composition of claim 6, comprising from 1 to 5 weight percent of a methacrylate-acrylate-siloxane copolymer.

9. The thermoplastic composition of claim 1, comprising:
from 15 to 45 weight percent of a PBT;
from 20 to 65 weight percent of a polycarbonate which is selected from bisphenol A polycarbonate and 2-phenyl-3,3-bis(4-hydroxyphenyl)phthalimidine (PPPBP)/bisphenol A (BPA) copolycarbonate, or a combination thereof;
a silicone material where the siloxane content is greater than 15 weight percent wherein the silicone material is selected from the group consisting of: (i) from 20 to 40 weight percent of a polyorganosiloxane-polycarbonate copolymer; and (ii) from 1 to 5 weight percent of a silicone rubber; or a mixture thereof;
from 5 to 25 percent of a bisphenol A-based polyphosphonate flame retardant, wherein the phosphorous content is at least 2 percent by weight and the molecular weight of the polyphosphonate is more than 20000; wherein the molecular weight was determined as presented in the description and
from 0.5 to 2 weight percent of an antidripping agent;
and wherein the composition has:
a notched Izod impact strength of greater than 500 J/m measured at room temperature, according to ASTM D256 on a sample bar molded from the composition and having a thickness of 3.2 mm;
a Vicat softening temperature higher than 120 °C in accordance with ASTM D1525 on a sample bar molded from the composition and having a thickness of 3.2 mm; and
a UL-94 flammability rating of V0 measured on a molded sample with a thickness of 1.5 mm.

10. The thermoplastic composition of claim 9, comprising:
from 17 to 37 weight percent of a PBT;
from 25 to 60 weight percent of a polycarbonate which is selected from bisphenol A polycarbonate and 2-phenyl-3,3-bis(4-hydroxyphenyl)phthalimidine (PPPBP)/bisphenol A (BPA) copolycarbonate, or a combination thereof;
a silicone material where the siloxane content is greater than 15 weight percent wherein the silicone material is selected from the group consisting of: (i) from 22 to 38 weight percent of a polyorganosiloxane-polycarbonate copolymer; and (ii) from 1 to 5 weight percent of a silicone rubber; or a mixture thereof;
from 7 to 17 percent of a bisphenol A-based polyphosphonate flame retardant, wherein the phosphorous content is at least 2 percent by weight and the molecular weight of the polyphosphonate is more than 20000; wherein the molecular weight was determined as presented in the description and
from 0.5 to 2 weight percent of an antidripping agent which is poly(tetrafluoro ethylene) : styrene-acrylonitrile 50:50;
and wherein the composition has:
a notched Izod impact strength of greater than 500 J/m measured at room temperature, according to ASTM D256 on a sample bar molded from the composition and having a thickness of 3.2 mm;
a Vicat softening temperature higher than 120 °C in accordance with ASTM D1525 on a sample bar molded from the composition and having a thickness of 3.2 mm; and
a UL-94 flammability rating of V0 measured on a molded sample with a thickness of 1.5 mm.

11. The thermoplastic composition of claim 10, comprising:
from 17 to 37 weight percent of a PBT;
from 25 to 60 weight percent of a polycarbonate which is selected from bisphenol A polycarbonate and 2-phenyl-3,3-bis(4-hydroxyphenyl)phthalimidine (PPPBP)/bisphenol A (BPA) copolycarbonate, or a combination thereof;
a silicone material where the siloxane content is greater than 15 weight percent wherein the silicone material is from 22 to 38 weight percent of a polyorganosiloxane-polycarbonate copolymer;
from 7 to 17 percent of a bisphenol A-based polyphosphonate flame retardant, wherein the phosphorous content is at least 2 percent by weight and the molecular weight of the polyphosphonate is more than 20000; wherein the molecular weight was determined as presented in the description and
from 0.5 to 2 weight percent of an antidripping agent which is poly(tetrafluoro ethylene) : styrene-acrylonitrile 50:50;
and wherein the composition has:
a notched Izod impact strength of greater than 500 J/m measured at room temperature, according to ASTM D256 on a sample bar molded from the composition and having a thickness of 3.2 mm;
a Vicat softening temperature higher than 120 °C in accordance with ASTM D1525 on a sample bar molded from the composition and having a thickness of 3.2 mm; and
a UL-94 flammability rating of V0 measured on a molded sample with a thickness of 1.5 mm.

12. The thermoplastic composition of claim 10, comprising:
from 17 to 37 weight percent of a PBT;
from 25 to 60 weight percent of a polycarbonate which is selected from bisphenol A polycarbonate and 2-phenyl-3,3-bis(4-hydroxyphenyl)phthalimidine (PPPBP)/bisphenol A (BPA) copolycarbonate, or a combination thereof;
a silicone material where the siloxane content is greater than 15 weight percent wherein the silicone material is from 1 to 5 weight percent of methacrylate-acrylate-siloxane copolymer; or a mixture thereof;
from 7 to 17 percent of a bisphenol A-based polyphosphonate flame retardant, wherein the phosphorous content is at least 2 percent by weight and the molecular weight of the polyphosphonate is more than 20000; wherein the molecular weight was determined as presented in the description and
from 0.5 to 2 weight percent of an antidripping agent which is poly(tetrafluoro ethylene) : styrene-acrylonitrile 50:50;
and wherein the composition has:
a notched Izod impact strength of greater than 500 J/m measured at room temperature, according to ASTM D256 on a sample bar molded from the composition and having a thickness of 3.2 mm;
a Vicat softening temperature higher than 120 °C in accordance with ASTM D1525 on a sample bar molded from the composition and having a thickness of 3.2 mm; and
a UL-94 flammability rating of V0 measured on a molded sample with a thickness of 1.5 mm.

13. An article prepared from the composition of claim 1.

## Patentansprüche

1. Thermoplastische Zusammensetzung mit, bezogen auf das Gesamtgewicht der Zusammensetzung:
10 bis 50 Gewichtsprozent eines Polyesters auf Terephthalatbasis;
15 bis 65 Gewichtsprozent eines Polycarbonats;
einem Silikonmaterial, das ausgewählt ist aus der Gruppe bestehend aus: (i) 20 bis 40 Gewichtsprozent eines Polyorganosiloxan-Polycarbonat-Copolymers und (ii) 1 bis 5 Gewichtsprozent eines Silikonkautschuks oder einer Mischung davon, wobei der Siloxangehalt des Silikonmaterials größer ist als 15 Gewichtsprozent;
3 bis 40% eines Polyphosphonat-Flammschutzmittels auf Bisphenol-A-Basis, wobei der Phosphorgehalt mindestens 2 Gewichtsprozent beträgt und das Molekulargewicht des Polyphosphonats größer ist als 20000, wobei das Molekulargewicht wie in der Beschreibung dargestellt bestimmt wurde; und
0,01 bis 5 Gewichtsprozent eines Antitropfmittels,
und wobei die Zusammensetzung aufweist:
eine Izod-Kerbschlagzähigkeit von mehr als 500 J/m, gemessen bei Raumtemperatur gemäß ASTM D256 für einen aus der Zusammensetzung geformten Probestab mit einer Dicke von 3,2 mm;
eine Vicat-Erweichungstemperatur von mehr als 120°C, gemessen gemäß ASTM D1525 für einen aus der Zusammensetzung geformten Probestab mit einer Dicke von 3,2 mm; und
eine Entflammbarkeitsklasse V0 nach UL-94, gemessen für eine geformte Probe mit einer Dicke von 1,5 mm.

2. Thermoplastische Zusammensetzung nach Anspruch 1, wobei das Polycarbonat ein Polycarbonat auf Bisphenol-A-Basis ist.

3. Thermoplastische Zusammensetzung nach Anspruch 2, mit 20 bis 65 Gewichtsprozent eines Polycarbonats auf Bisphenol-A-Basis.

4. Thermoplastische Zusammensetzung nach Anspruch 1, wobei der Polyester auf Terephthalatbasis ein Polyethylenterephthalat oder ein Poly(1,4-butylen)terephthalat oder eine Mischung davon ist.

5. Thermoplastische Zusammensetzung nach Anspruch 4, mit 15 bis 40 Gewichtsprozent PBT oder PET oder einer Mischung davon.

6. Thermoplastische Zusammensetzung nach Anspruch 1, wobei das Silikonmaterial ausgewählt ist aus der Gruppe bestehend aus einem Polycarbonat-Polysiloxan-Copolymer und einem Methacrylat-Acrylat-Siloxan-Copolymer oder einer Mischung davon.

7. Thermoplastische Zusammensetzung nach Anspruch 6, mit 20 bis 40 Gewichtsprozent eines Polycarbonat-Polysiloxan-Copolymers, wobei das Polycarbonat ein Polycarbonat auf Bisphenol-A-Basis ist.

8. Thermoplastische Zusammensetzung nach Anspruch 6, mit 1 bis 5 Gewichtsprozent eines Methacrylat-Acrylat-Siloxan-Copolymers.

9. Thermoplastische Zusammensetzung nach Anspruch 1, mit:
15 bis 45 Gewichtsprozent eines PBT;
20 bis 65 Gewichtsprozent eines Polycarbonats, das ausgewählt ist aus Bisphenol-A-Polycarbonat und 2-Phenyl-3,3-bis(4-hydroxyphenyl)phthalimidin (PPPBP)/Bisphenol-A- (BPA) Copolycarbonat oder einer Kombination davon;
einem Silikonmaterial, wobei der Siloxangehalt größer ist als 15 Gewichtsprozent, wobei das Silikonmaterial ausgewählt ist aus der Gruppe bestehend aus: (i) 20 bis 40 Gewichtsprozent eines Polyorganosiloxan-Polycarbonat-Copolymers und (ii) 1 bis 5 Gewichtsprozent eines Silikonkautschuks oder einer Mischung davon;
5 bis 25 Gewichtsprozent eines Polyphosphonat-Flammschutzmittels auf Bisphenol-A-Basis, wobei der Phosphorgehalt mindestens 2 Gewichtsprozent beträgt und das Molekulargewicht des Polyphosphonats mehr als 20000 beträgt, wobei das Molekulargewicht wie in der Beschreibung dargestellt bestimmt wird; und
0,5 bis 2 Gewichtsprozent eines Antitropfmittels,
und wobei die Zusammensetzung aufweist:
eine Izod-Kerbschlagfestigkeit von mehr als 500 J/m, gemessen bei Raumtemperatur gemäß ASTM D256 für einen aus der Zusammensetzung geformten Probestab mit einer Dicke von 3,2 mm;
eine Vicat-Erweichungstemperatur von mehr als 120°C, gemessen gemäß ASTM D1525 für einen aus der Zusammensetzung geformten Probestab mit einer Dicke von 3,2 mm; und
eine Entflammbarkeitsklasse V0 nach UL-94, gemessen für eine geformte Probe mit einer Dicke von 1,5 mm.

10. Thermoplastische Zusammensetzung nach Anspruch 9, mit:
17 bis 37 Gewichtsprozent eines PBT;
25 bis 60 Gewichtsprozent eines Polycarbonats, das ausgewählt ist aus Bisphenol-A-Polycarbonat und 2-Phenyl-3,3-bis(4-hydroxyphenyl)phthalimidin (PPPBP)/Bisphenol-A- (BPA) Copolycarbonat oder einer Kombination davon;
einem Silikonmaterial, wobei der Siloxangehalt größer ist als 15 Gewichtsprozent, wobei das Silikonmaterial ausgewählt ist aus der Gruppe bestehend aus (i) 22 bis 38 Gewichtsprozent eines Polyorganosiloxan-Polycarbonat-Copolymers und (ii) 1 bis 5 Gewichtsprozent eines Silikonkautschuks oder einer Mischung davon;
7 bis 17 Prozent eines Polyphosphonat-Flammschutzmittels auf Bisphenol-A-Basis, wobei der Phosphorgehalt mindestens 2 Gewichtsprozent beträgt und das Molekulargewicht des Polyphosphonats mehr als 20000 beträgt, wobei das Molekulargewicht wie in der Beschreibung dargestellt bestimmt wurde; und
0,5 bis 2 Gewichtsprozent eines Antitropfmittels, das aus Poly(tetrafluorethylen) und Styrol-Acrylnitril in einem Verhältnis von 50:50 besteht,
und wobei die Zusammensetzung aufweist:
eine Izod-Kerbschlagfestigkeit von mehr als 500 J/m, gemessen bei Raumtemperatur gemäß ASTM D256 für einen aus der Zusammensetzung geformten Probestab mit einer Dicke von 3,2 mm;
eine Vicat-Erweichungstemperatur von mehr als 120°C, gemessen gemäß ASTM D1525 für einen aus der Zusammensetzung geformten Probestab mit einer Dicke von 3,2 mm; und
eine Entflammbarkeitsklasse V0 nach UL-94, gemessen für eine geformte Probe mit einer Dicke von 1,5 mm.

11. Thermoplastische Zusammensetzung nach Anspruch 10, mit:
17 bis 37 Gewichtsprozent eines PBT;
25 bis 60 Gewichtsprozent eines Polycarbonats, das ausgewählt ist aus Bisphenol-A-Polycarbonat und 2-Phenyl-3,3-bis(4-hydroxyphenyl)phthalimidin (PPPBP)/Bisphenol-A- (BPA) Copolycarbonat oder einer Kombination davon;
einem Silikonmaterial, wobei der Siloxangehalt mehr als 15 Gewichtsprozent beträgt, wobei das Silikonmaterial 22 bis 38 Gewichtsprozent eines Polyorganosiloxan-Polycarbonat-Copolymers aufweist;
7 bis 17% eines Polyphosphonat-Flammschutzmittels auf Bisphenol-A-Basis, wobei der Phosphorgehalt mindestens 2 Gewichtsprozent beträgt und das Molekulargewicht des Polyphosphonats mehr als 20000 beträgt, wobei das Molekulargewicht wie in der Beschreibung dargestellt bestimmt wurde; und
0,5 bis 2 Gewichtsprozent eines Antitropfmittels, das Poly(tetrafluorethylen) und Styrol-Acrylnitril im Verhältnis von 50:50 aufweist;
und wobei die Zusammensetzung aufweist:
eine Izod-Kerbschlagfestigkeit von mehr als 500 J/m, gemessen bei Raumtemperatur gemäß ASTM D256 für einen aus der Zusammensetzung geformten Probestab mit einer Dicke von 3,2 mm;
eine Vicat-Erweichungstemperatur von mehr als 120°C, gemessen gemäß ASTM D1525 für einen aus der Zusammensetzung geformten Probestab mit einer Dicke von 3,2 mm; und
eine Entflammbarkeitsklasse V0 nach UL-94, gemessen für eine geformte Probe mit einer Dicke von 1,5 mm.

12. Thermoplastische Zusammensetzung nach Anspruch 10, mit:
17 bis 37 Gewichtsprozent eines PBT;
25 bis 60 Gewichtsprozent eines Polycarbonats, das ausgewählt ist aus Bisphenol-A-Polycarbonat und 2-Phenyl-3,3-bis(4-hydroxyphenyl)phthalimidin (PPPBP)/Bisphenol-A- (BPA) Copolycarbonat oder einer Kombination davon;
einem Silikonmaterial, wobei der Siloxangehalt größer ist als 15 Gewichtsprozent, und wobei das Silikonmaterial 1 bis 5 Gewichtsprozent Methacrylat-Acrylat-Siloxan-Copolymer aufweist, oder einer Mischung davon;
7 bis 17 Prozent eines Polyphosphonat-Flammschutzmittels auf Bisphenol-A-Basis, wobei der Phosphorgehalt mindestens 2 Gewichtsprozent beträgt und das Molekulargewicht des Polyphosphonats mehr als 20000 beträgt, wobei das Molekulargewicht wie in der Beschreibung dargestellt bestimmt wurde; und
0,5 bis 2 Gewichtsprozent eines Antitropfmittels, das Poly(tetrafluorethylen) und Styrol-Acrylnitril im Verhältnis von 50:50 aufweist,
und wobei die Zusammensetzung aufweist:
eine Izod-Kerbschlagfestigkeit von mehr als 500 J/m, gemessen bei Raumtemperatur gemäß ASTM D256 für einen aus der Zusammensetzung geformten Probestab mit einer Dicke von 3,2 mm;
eine Vicat-Erweichungstemperatur von mehr als 120°C, gemessen gemäß ASTM D1525 für einen aus der Zusammensetzung geformten Probestab mit einer Dicke von 3,2 mm; und
eine Entflammbarkeitsklasse V0 nach UL-94, gemessen für eine geformte Probe mit einer Dicke von 1,5 mm.

13. Artikel, der aus der Zusammensetzung nach einem der Ansprüche 1 bis 12 hergestellt ist.

## Revendications

1. Composition thermoplastique comprenant, sur la base du poids total de la composition :
de 10 à 50 % en poids d'un polyester à base de téréphtalate ;
de 15 à 65 % en poids d'un polycarbonate ;
une matière silicone choisie dans le groupe constitué par : (i) de 20 à 40 % en poids d'un copolymère de polyorganosiloxane-polycarbonate ; et (ii) de 1 à 5 % en poids de caoutchouc silicone ; ou un mélange de ceux-ci, où la teneur en siloxane de la matière silicone est supérieure à 15 % en poids ;
de 3 à 40 % d'un ignifugeant polyphosphonate à base de bisphénol A, dans lequel la teneur en phosphore est d'au moins 2 % en poids et le poids moléculaire du polyphosphonate est supérieur à 20 000 ; où le poids moléculaire a été déterminé comme présenté dans la description ; et
de 0,01 à 5 % en poids d'un agent antigouttes ;
et dans laquelle la composition a :
une résistance au choc Izod sur éprouvette entaillée, mesurée à température ambiante selon ASTM D256 sur une barre d'essai moulée à partir de la composition et d'une épaisseur de 3,2 mm, supérieure à 500 J/m ;
une température de ramollissement Vicat mesurée selon ASTM D1525 sur une barre d'essai moulée à partir de la composition et d'une épaisseur de 3,2 mm, supérieure à 120 °C ; et
un indice d'inflammabilité UL-94, mesuré sur un échantillon moulé d'une épaisseur de 1,5 mm, de V0.

2. Composition thermoplastique selon la revendication 1, dans laquelle le polycarbonate est un polycarbonate à base de bisphénol A.

3. Composition thermoplastique selon la revendication 2, comprenant de 20 à 65 % en poids de polycarbonate à base de bisphénol A.

4. Composition thermoplastique selon la revendication 1, dans laquelle polyester à base de téréphtalate est un polyéthylène téréphtalate ou un poly(1,4-butylène)téréphtalate ou un mélange de ceux-ci.

5. Composition thermoplastique selon la revendication 4, comprenant de 15 à 40 % en poids de PBT ou de PET ou un mélange de ceux-ci.

6. Composition thermoplastique selon la revendication 1, dans laquelle la matière silicone est choisie dans le groupe constitué par un copolymère de polycarbonate-polysiloxane et un copolymère de méthacrylate-acrylate-siloxane, ou un mélange de ceux-ci.

7. Composition thermoplastique selon la revendication 6, comprenant de 20 à 40 % en poids d'un copolymère de polycarbonate-polysiloxane, dans laquelle le polycarbonate est un polycarbonate à base de bisphénol A.

8. Composition thermoplastique selon la revendication 6, comprenant de 1 à 5 % en poids d'un copolymère de méthacrylate-acrylate-siloxane.

9. Composition thermoplastique selon la revendication 1, comprenant :
de 15 à 45 % en poids de PBT ;
de 20 à 65 % en poids d'un polycarbonate qui est choisi parmi un polycarbonate à base de bisphénol A et un copolycarbonate 2-phényl-3,3-bis(4-hydroxyphényl)-phtalimidine (PPPBP)/bisphénol A (BPA), ou une combinaison de ceux-ci ;
une matière silicone ayant une teneur en siloxane supérieure à 15 % en poids dans laquelle la matière silicone est choisie dans le groupe constitué par : (i) de 20 à 40 % en poids d'un copolymère de polyorganosiloxane-polycarbonate ; et (ii) de 1 à 5 % en poids de caoutchouc silicone ; ou un mélange de ceux-ci ;
de 5 à 25 % d'un ignifugeant polyphosphonate à base de bisphénol A, dans lequel la teneur en phosphore est d'au moins 2 % en poids et le poids moléculaire du polyphosphonate est supérieur à 20 000 ; où le poids moléculaire a été déterminé comme présenté dans la description ; et
de 0,5 à 2 % en poids d'un agent antigouttes ;
et dans laquelle la composition a :
une résistance au choc Izod sur éprouvette entaillée, mesurée à température ambiante selon ASTM D256 sur une barre d'essai moulée à partir de la composition et d'une épaisseur de 3,2 mm, supérieure à 500 J/m ;
une température de ramollissement Vicat mesurée selon ASTM D1525 sur une barre d'essai moulée à partir de la composition et d'une épaisseur de 3,2 mm, supérieure à 120 °C ; et
un indice d'inflammabilité UL-94, mesuré sur un échantillon moulé d'une épaisseur de 1,5 mm, de V0.

10. Composition thermoplastique selon la revendication 9, comprenant :
de 17 à 37 % en poids de PBT ;
de 25 à 60 % en poids d'un polycarbonate qui est choisi parmi un polycarbonate à base de bisphénol A et un copolycarbonate 2-phényl-3,3-bis(4-hydroxyphényl)-phtalimidine (PPPBP)/bisphénol A (BPA), ou une combinaison de ceux-ci ;
une matière silicone ayant une teneur en siloxane supérieure à 15 % en poids dans laquelle la matière silicone est choisie dans le groupe constitué par : (i) de 22 à 38 % en poids d'un copolymère de polyorganosiloxane-polycarbonate ; et (ii) de 1 à 5 % en poids de caoutchouc silicone ; ou un mélange de ceux-ci ;
de 7 à 17 % d'un ignifugeant polyphosphonate à base de bisphénol A, dans lequel la teneur en phosphore est d'au moins 2 % en poids et le poids moléculaire du polyphosphonate est supérieur à 20 000 ; où le poids moléculaire a été déterminé comme présenté dans la description ; et
de 0,5 à 2 % en poids d'un agent antigouttes qui est un poly(tétrafluoroéthylène):styrène-acrylonitrile 50:50 ;
et dans laquelle la composition a :
une résistance au choc Izod sur éprouvette entaillée, mesurée à température ambiante selon ASTM D256 sur une barre d'essai moulée à partir de la composition et d'une épaisseur de 3,2 mm, supérieure à 500 J/m ;
une température de ramollissement Vicat mesurée selon ASTM D1525 sur une barre d'essai moulée à partir de la composition et d'une épaisseur de 3,2 mm, supérieure à 120 °C ; et
un indice d'inflammabilité UL-94, mesuré sur un échantillon moulé d'une épaisseur de 1,5 mm, de V0.

11. Composition thermoplastique selon la revendication 10, comprenant :
de 17 à 37 % en poids de PBT ;
de 25 à 60 % en poids d'un polycarbonate qui est choisi parmi un polycarbonate à base de bisphénol A et un copolycarbonate 2-phényl-3,3-bis(4-hydroxyphényl)-phtalimidine (PPPBP)/bisphénol A (BPA), ou une combinaison de ceux-ci ;
une matière silicone ayant une teneur en siloxane supérieure à 15 % en poids dans laquelle la matière silicone est constituée à 22-38 % en poids par un copolymère de polyorganosiloxane-polycarbonate ;
de 7 à 17 % d'un ignifugeant polyphosphonate à base de bisphénol A, dans lequel la teneur en phosphore est d'au moins 2 % en poids et le poids moléculaire du polyphosphonate est supérieur à 20 000 ; où le poids moléculaire a été déterminé comme présenté dans la description ; et
de 0,5 à 2 % en poids d'un agent antigouttes qui est un poly(tétrafluoroéthylène):styrène-acrylonitrile 50:50 ;
et dans laquelle la composition a :
une résistance au choc Izod sur éprouvette entaillée, mesurée à température ambiante selon ASTM D256 sur une barre d'essai moulée à partir de la composition et d'une épaisseur de 3,2 mm, supérieure à 500 J/m ;
une température de ramollissement Vicat mesurée selon ASTM D1525 sur une barre d'essai moulée à partir de la composition et d'une épaisseur de 3,2 mm, supérieure à 120 °C ; et
un indice d'inflammabilité UL-94, mesuré sur un échantillon moulé d'une épaisseur de 1,5 mm, de V0.

12. Composition thermoplastique selon la revendication 10, comprenant :
de 17 à 37 % en poids de PBT ;
de 25 à 60 % en poids d'un polycarbonate qui est choisi parmi un polycarbonate à base de bisphénol A et un copolycarbonate 2-phényl-3,3-bis(4-hydroxyphényl)-phtalimidine (PPPBP)/bisphénol A (BPA), ou une combinaison de ceux-ci ;
une matière silicone ayant une teneur en siloxane supérieure à 15 % en poids dans laquelle la matière silicone est constituée à 1-5 % en poids par un copolymère de méthacrylate-acrylate-siloxane ;
de 7 à 17 % d'un ignifugeant polyphosphonate à base de bisphénol A, dans lequel la teneur en phosphore est d'au moins 2 % en poids et le poids moléculaire du polyphosphonate est supérieur à 20 000 ; où le poids moléculaire a été déterminé comme présenté dans la description ; et
de 0,5 à 2% en poids d'un agent antigouttes qui est un poly(tétrafluoroéthylène):styrène-acrylonitrile 50:50 ;
et dans laquelle la composition a :
une résistance au choc Izod sur éprouvette entaillée, mesurée à température ambiante selon ASTM D256 sur une barre d'essai moulée à partir de la composition et d'une épaisseur de 3,2 mm, supérieure à 500 J/m ;
une température de ramollissement Vicat mesurée selon ASTM D1525 sur une barre d'essai moulée à partir de la composition et d'une épaisseur de 3,2 mm, supérieure à 120 °C ; et
un indice d'inflammabilité UL-94, mesuré sur un échantillon moulé d'une épaisseur de 1,5 mm, de V0.

13. Article préparé à partir de la composition selon la revendication 1.
